(19) Europäisches Patentamt
European Patent Office
Office européen des brevets

(11) Publication number: **0 009 642**
**B1**

(12) # EUROPEAN PATENT SPECIFICATION

(45) Date of publication of patent specification: **24.03.82**

(51) Int. Cl.³: **C 08 G 79/02**

(21) Application number: **79103274.1**

(22) Date of filing: **05.09.79**

(54) **Preparation of phosphazene copolymers containing unsaturated substituents derived from pyruvate esters and aldehydes or ketones.**

(30) Priority: **08.09.78 US 941108**
**08.09.78 US 941114**

(43) Date of publication of application:
**16.04.80 Bulletin 80/8**

(45) Publication of the grant of the patent:
**24.03.82 Bulletin 82/12**

(84) Designated Contracting States:
**BE DE FR GB IT NL SE**

(56) References cited:
**US - A - 3 888 799**
**US - A - 974 242**

**CHEMICAL TECHNOLOGY, 19 September 1975 Washington.**
**H. R. ALLCOCK, "Poly(organophosphazenes)" pages 552 to 560.**

(73) Proprietor: **THE FIRESTONE TIRE & RUBBER COMPANY**
**1200 Firestone Parkway**
**Akron, Ohio 44317 (US)**

(72) Inventor: **Hergenrother, William Lee**
**195 Dorchester Road**
**Akron Ohio 44313 (US)**
Inventor: **Halasa, Adel Farhan**
**5040 Everett Road**
**Bath Ohio 44210 (US)**

(74) Representative: **Kraus, Walter, Dr. et al,**
**Patentanwälte Dres. Kraus & Weisert**
**Irmgardstrasse 15**
**D-8000 München 71 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 009 642 B1**

Preparation of phosphazene copolymers containing unsaturated substituents derived from pyruvate esters and aldehydes or ketones

This invention relates to a method of preparing polyphosphazene copolymers comprising randomly distributed units represented by the formulas:

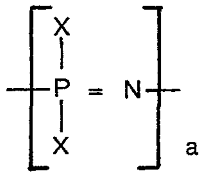
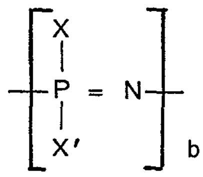
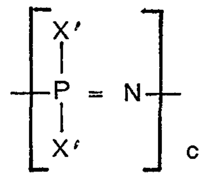

wherein X is

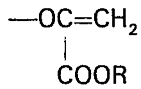 or 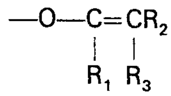

in which R is alkyl containing from 1 to 12 carbon atoms or aryl, $R_1$, $R_2$ and $R_3$ are independently selected from a group consisting of hydrogen, substituted and unsubstituted alkyl radicals containing from 1 to 15 carbon atoms, and substituted and unsubstituted cycloalkyl, aryl, arylalkyl, and heterocyclic radicals; and wherein X′ is selected from the group consisting of substituted and unsubstituted alkoxy, aryloxy, mercapto and amino radicals, or mixtures thereof; and wherein $20 \leq (a+b+c) \leq 50{,}000$ per polymer.

Polyphosphazene copolymers containing small amounts of certain unsaturated substituents which are capable of undergoing further reaction (i.e. crosslinking) at temperatures ranging from 93.3—177°C (200° to 350°F) are described in U.S. Patents 3,702,833; 3,844,983; 3,888,799 and 4,055,520. As described in the aforementioned patents, these reactive unsaturated substituents may be unsaturated monovalent radicals such as $—OCH{=}CH_2$; $—ORCH{=}CH_2$;

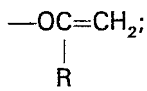

$—ORCF{=}CF_2$ and $—OCH_2RF{=}CF_2$ where R is an aliphatic or aromatic radical.

The copolymers described in the above patents exhibit a number of advantageous properties as a result of the inclusion of small amount of the above described unsaturated substituents therein. Thus, the copolymers when crosslinked are useful as solvent and chemically resistant coatings, sealant, potting compounds and so forth. However, the copolymers of these prior art patents require elevated temperatures i.e. 93.3—177°C (200 to 350°F) to affect crosslinking.

The object of this invention is to provide a process for the production of polyphosphazene copolymers which contain, as the cure site, unsaturated substituents which can be crosslinked or cured at room temperature or at elevated temperatures, if desired.

This object is accomplished by the invention which is characterized by reacting a polydichlorophosphazene polymer having the formula $—(NPCl_2)_n—$, wherein n is from 20 to 50,000, with a pyruvate ester having the formula $CH_3COCOOR$ in which R is alkyl containing from 1 to 12 carbon atoms or aryl and an aliphatic alcohol, aromatic alcohol, amino compound or mercaptan compound, or mixtures thereof, in the presence of a tertiary amine.

This object is also accomplished by reacting a polydichlorophosphazene having the formula $—(NPCl_2)_n$, wherein n is from 20 to 50,000 with an enol form of an aldehyde containing at least two carbon atoms or of a ketone or mixtures thereof as a first compound and a substituted or unsubstituted aliphatic alcohol, aromatic alcohol, amino compound or mercaptan compound or mixtures as a second compound thereof in the presence of a tertiary amine.

While the forementioned patents disclose copolymers containing various alkenoxy substituents, such unsaturated substituents are not the same as the unsaturated substituents of the copolymers as produced by the present invention. Moreover, the method of preparation employed in those patents cannot be utilized to form unsaturated substituents (i.e. $\alpha,\beta$-alkenoxy substituents) from aldehydes or ketones. Thus, for example, polyphosphazene copolymers containing certain alkenoxy groups have been disclosed in U.S. Patent 3,702,833. This patent shows the preparation of the polyphosphazene copolymers through the reaction of at least two different alkali metal fluoroalkoxides and a small percentage of an alkali metal alkylene alkoxide with a soluble polymer of phosphonitrilic chloride in benzene.

However, the method of preparation of the alkylene alkoxy polyphosphazene as set forth in U.S. Patent 3,702,833 using the alkali metal salt substitution procedure produces a polymer having

characteristics substantially different than copolymers containing $\alpha,\beta$-alkenoxy substituents derived from ketones and aldehydes as produced by the inventive method. The substitution method used in U.S. Patent 3,702,833 promotes the condensation of aldehydes and ketones and results in the production of a polymer in the form of an undefined tarry mass.

Polyphosphazene polymers containing repeating

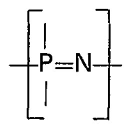

units in which various substituted and unsubstituted alkoxy, aryloxy, amino and mercapto groups are attached to the phosphorous atom and their method of preparation are described in the prior art as illustrated in the publication "Phosphorus-Nitrogen Compounds" Academic Press, New York, New York, 1972 by H. R. Allcock and "Poly(Organophosphazenes)", Chemtech, September 19, 1975 by H. R. Allcock and in such U.S. Patents as 3,515,688; 3,702,833; 3,856,712; 3,974,242; and 4,042,561.

In accordance with this invention, polyphosphazene copolymers are prepared which contain unsaturated substituents derived from pyruvate esters or aldehydes and ketones. Copolymers containing an unsaturated substituent derived from pyruvate esters have the

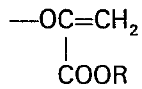

group attached to the phosphorus atom of the repeating

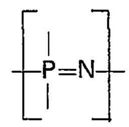

units in the polymer chain and are curable at room temperature. Copolymers containing an unsaturated substituent derived from aldehydes or ketones have the $\alpha,\beta$-alkenoxy group i.e.,

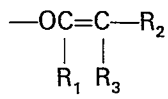

attached to the phosphorous atom.

These copolymers contain randomly distributed repeating units represented by the formulas:

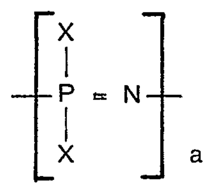, 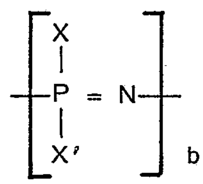 and 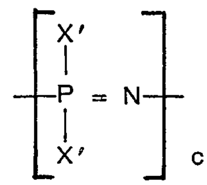

wherein X is represented by the formulas

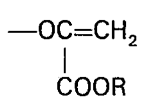 or 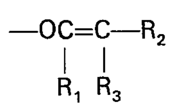

wherein R is alkyl containing from 1 to 12 carbon atoms or aryl, wherein $R_1$, $R_2$ and $R_3$ are independently selected from the group consisting of hydrogen, substituted and unsubstituted alkyl radicals containing from 1 to 15 carbon atoms, substituted and unsubstituted cycloalkyl, aryl, arylalkyl and heterocyclic radicals; and wherein X′ is selected from the group consisting of substituted and unsubstituted alkoxy, aryloxy, mercapto and amino radicals, and mixtures thereof; and $20 \leq (a+b+c) \leq 50{,}000$ per polymer.

In the copolymer units represented by the above formulas, all X substituent groups may be the same or they may be mixed and all X′ substituent groups may be the same or mixed. In the mixtures, the X substituent groups may be mixtures of substituent groups derived from different pyruvate esters or different aldehydes or ketones and the X′ substituent groups may be mixtures of alkoxy, aryloxy, amino and mercaptan groups or mixtures of different groups within each class (i.e. different alkoxy, aryloxy etc.).

The specific proportion of X to X′ substituent groups incorporated in the copolymers of the invention may vary considerably depending upon the specific identity of X, the particular end use for which the copolymer is intended, the chemical and physical properties desired, and the degree of crosslinking desired. In general, copolymers in which the X substituent is derived from a pyruvate ester may contain from about 0.1 to about 55 mole percent by weight of the X substituent and from about 45 to about 99.9 mole percent by weight of the X′ substituent. For applications such as moldings, coatings, foams and the like, such copolymers should contain at least ten (10) mole percent of the X substituent.

In copolymers in which the X substituent is an $\alpha,\beta$-alkenoxy group derived from aldehydes or ketones, the copolymer should contain at least 0.1 mole percent and preferably 0.5 mole percent by weight of the X substituent, the $\alpha,\beta$-alkenoxy group. This small percentage enables the polyphosphazene polymer to be crosslinked through the pendant $\alpha,\beta$-alkenoxy group or permits the substitution of a substituent group which cannot be substituted by means other than a reaction with an ethylenically unsaturated pendant group. The maximum percentage of $\alpha,\beta$-alkenoxy groups which can be substituted onto the polymers of the present invention is approximately 70 mole percent by weight.

Copolymers containing unsaturated substituents derived from pyruvate esters are prepared by reacting a poly(dichlorophosphazene) having the formula $-(NPCl_2)_n-$ in which n is from 20 to 50,000 with a pyruvate ester and a substituted or unsubstituted aliphatic alcohol, aromatic alcohol, amino compound or mercaptan compound in the presence of a tertiary amine. Especially useful pyruvate esters are methyl pyruvate and ethyl pyruvate.

Copolymers containing unsaturated substituents derived from aldehydes or ketones (i.e. $\alpha,\beta$-alkenoxy substituents) are prepared by reacting a poly(dichlorophosphazene) having the formula $-(NPCl_2)_n-$, in which n is from 20 to 50,000, in the presence of a tertiary amine, with a mixture of an enol form of an aldehyde or a ketone and a substituted or unsubstituted aliphatic alcohol, aromatic alcohol, amino compound or mercaptan compound in the presence of a tertiary amine.

The $\alpha,\beta$-alkenoxy substitution procedure of the present invention produces an $\alpha,\beta$-alkenoxy substituted polyphosphazene polymer which is free of any undesirable condensation groups which may be formed by a reaction between tautomeric forms of the keto and enol structures upon attempted substitution by prior art methods. Therefore, only through the use of the tertiary amine substitution process can the desired non-condensated, $\alpha,\beta$-alkenoxy substitutions be produced.

In addition, substitution of the $\alpha,\beta$-alkenoxy groups by the procedure of the present invention permits the easy control of the amount of unsaturation introduced into the polyphosphazene polymer within the range of 0.1 to 70 mole percent of $\alpha,\beta$-alkenoxy per polyphosphazene polymer.

Poly(dichlorophosphazene) polymers which are employed as starting materials in preparing the copolymers of this invention are well known in the art as illustrated in U.S. Patents 3,370,020; 4,005,171; and 4,055,520.

These polymers have the general formula $-(NPCl_2)_n-$ in which n may range from 20 to 50,000 or more. As described in the aforementioned references, the polymers are in general prepared by the thermal polymerization of cyclic oligomers having the formula $-(NPCl_2)_n-$, in which n is an integer of from 3 to 7, with the cyclic trimer and tetramer often comprising up to 90% of the oligomers.

The specific conditions of temperature, pressure and time employed in the thermal polymerization of the cyclic oligomers can vary considerably depending on whether or not the polymerization is catalyzed. Thus, temperatures may range from about 130°C to about 300°C, pressures may range from a vacuum of less than about 13,3 Pa ($10^{-1}$ Torr) to superatmospheric and times may range from 30 minutes to about 48 hours.

A preferred process for preparing the poly(dichlorophosphazene) polymers used in the process of this invention is described in the aforementioned U.S. Patent 4,005,171.

Pyruvate esters (i.e., esters of pyruvic acid) which may be employed in forming the

$$-\underset{\substack{|\\COOR}}{OC}=CH_2$$

substituent of the copolymer are those represented by the formula $CH_3COCOOR$ wherein R is an alkyl radical containing from 1 to 12 carbon atoms or an aryl radical. Illustrative of pyruvate esters of the above formula which may be employed are methyl pyruvate, ethyl pyruvate, n-propyl pyruvate, n-butyl pyruvate, phenyl pyruvate, p-ethylphenyl pyruvate, and the like. The preferred pyruvate esters are those in which R is alkyl containing 1 to 12 carbon atoms and of these methyl and ethyl pyruvate are particularly preferred.

The specific reaction scheme by which these esters react with the polydichlorophosphazene polymer to incorporate the

$$-\underset{\substack{|\\COOR}}{OC}=CH_2$$

substituent thereon is not known with certitude. However, while not wishing to be bound by any

particular theory, it is believed that in the presence of solvent and a basic or acidic catalyst the pyruvate ester either forms an equilibrium with its enol tautomer or forms enolate anions by removal of a proton from the carbon atom alpha to the carbonyl group. In either case, the enol or enolate form of the pyruvate ester would then be available for reaction with the polydichlorophosphazene polymer.

Copolymers produced by the invention which contain unsaturated substituents derived from pyruvate esters may be utilized to form solvent resistant protective films and may also be utilized for molding, coatings, foams and the like. Additionally, such copolymers may be utilized as crosslinking agents for other reactive monomers or polymers. Moreover, these copolymers may be cured or crosslinked at room temperature. Further, the copolymers may be crosslinked or cured using peroxide catalysts such as benzoyl peroxide or dicumyl peroxide.

The enol and keto forms of the aldehydes and the ketones which can be used to form the polyphosphazene polymers of the present invention are represented by the following structural formula:

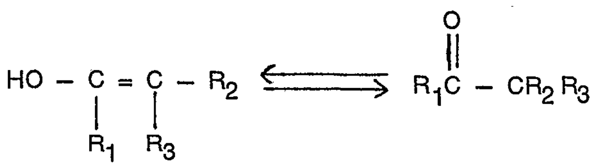

(enol) (keto)

where $R_1$, $R_2$ and $R_3$ are independently selected from the group consisting of hydrogen, substituted and unsubstituted alkyl radicals containing from 1 to 15 carbon atoms, substituted and unsubstituted cycloalkyl, aryl, arylalkyl and heterocyclic radicals. It is preferred that $R_3$ be hydrogen when the $\alpha,\beta$-alkenoxy group is to serve as a crosslinking group, for if $R_2$ and $R_3$ are both substitutions other than hydrogen, the $\alpha,\beta$-alkenoxy group is less reactive as a crosslinking group. When $R_1$ is hydrogen the above structural formulas represent the enol and keto tautomeric forms of aldehydes, while when $R_1$ is other than hydrogen a ketone is represented by the structural formulas.

Illustrative examples of aldehydes which may be employed in producing the copolymers of the present invention include alkyl containing aldehydes such as acetaldehyde. propionaldehyde, n-butyraldehyde, valeraldehyde, $\alpha$-methyl-valeraldehyde, $\beta$-methylvaleraldehyde, n-caproaldehyde, isocaproaldehyde and the like; cycloalkyl aldehydes such as cyclohexylaldehyde; aryl and arylalkyl aldehydes such as phenylacetaldehyde, 3-phenyl-pripionaldehyde, o-, m- and p-methylphenylacetaldehyde and the like; and heterocyclic aldehydes such as 2-furanacetaldehyde.

Illustrative examples of ketones which may be used to prepare the polymers of the invention include: acetone, methyl ethyl ketone, methyl n-propyl ketone, ethyl ketone, methyl isopropyl ketone, methyl n-butyl ketone, propyl ketone, ethyl n-propyl ketone, methyl sec-butyl ketone, methyl t-butyl ketone, methyl n-pentyl ketone, ethyl n-pentyl ketone, pentyl ketone, methyl hexyl ketone, acetophenone, n-butyrophenone benzyl methyl ketone, benzyl ethyl ketone, benzyl propyl ketone, benzyl hexyl ketone, 2-furyl methyl ketone and the like.

Preferred aldehyde compounds for preparing the polyphosphazene polymers of the invention include acetaldehyde and propionaldehyde. Preferred ketone compounds include acetone and acetophenone.

Mixtures of an aldehyde and a ketone can also be used in preparing the polymers of the invention as well as mixtures of aldehydes and mixtures of ketones.

As indicated, copolymers containing unsaturated substituents derived from aldehydes or ketones (i.e., $\alpha,\beta$-alkenoxy substituents) are prepared by reacting a poly(dichlorophosphazene) with a mixture of an enol form of an aldehyde or ketone and a substituted or unsubstituted aliphatic alcohol, aromatic alcohol, amino compound or mercaptan compound in the presence of a tertiary amine.

Such polyphosphazene copolymers may also be formed by using prior art techniques to partially substitute the poly(dichlorophosphazene) with alkoxy, aryloxy, amino or mercapto groups either before or after the $\alpha,\beta$-alkenoxy groups have been substituted on the polyphosphazene polymer using the tertiary amine process.

These copolymers contain pendant unsaturation groups, i.e., the $\alpha,\beta$-alkenoxy groups. Polyphosphazene copolymers containing these groups may be modified by crosslinking and/or curing. Thus, the polymers may be crosslinked with suitable peroxide curing agents such as dicumyl peroxide or benzoyl peroxide. The crosslinking reactions are often run in the presence of inert, reinforcing or other fillers and the presence of these fillers should in no way be construed as falling outside the scope of this invention.

These peroxide curing agents can be used to initiate a free radical addition of substituents derived from timethylsilane, trimethoxysilane, thiophenol or ethyl mercaptan to the $\alpha,\beta$-alkenoxy substituent on the polyphosphazene polymer of the present invention. The free radical addition may be performed at approximately 50°C. in the presence of a suitable solvent.

The $\alpha,\beta$-alkenoxy functionality containing polyphosphazene copolymers of this invention can be

used to crosslink polymers containing ethylenic unsaturation such as those which are formed from alpha, beta-ethylenically unsaturated monomers, i.e., vinyl monomers, where the unsaturated groups are reactive with the ethylenically unsaturated functionality of the polyphosphazene copolymers. Examples of polymers which can be crosslinked using the polymers of the invention include vinyl interpolymers, acrylic interpolymers, styrene interpolymers and polyesters containing ethylenic unsaturation, as well as polyene interpolymers such as EPDM rubbers and butyl rubbers as well as their halogenated derivatives.

In addition, mixture of the $\alpha,\beta$-alkenoxy containing polyphosphazene copolymers and an ethylenically unsaturated monomer such as vinyl chloride, styrene, vinylidene chloride, $C_1$—$C_{12}$ alkylacrylates, and acrylonitrile can be used to form a crosslinked polymer system.

Further polymers in admixture with reactive monomers can be crosslinked with the $\alpha,\beta$-alkenoxy containing polyphosphazene copolymers. Examples include unsaturated polyesters with one or more reactive monomers such as vinyl esters of carboxylic acids such as vinyl acetate, vinyl butyrate, and vinyl stearate, the $C_{1-20}$ alkyl esters of acrylic and methacrylic acid such as methyl methacrylate, methyl acrylate, ethyl acrylate, butyl acrylate, 2-ethylhexyl acrylate and lauryl acrylate; aryl, halo- and nitro-substituted benzyl esters of acrylic and methacrylic acid such as benzyl acrylate and 2-chlorobenzyl acrylate; ethylenically unsaturated monocarboxylic acids such as acrylic and methacrylic acids; ethylenically unsaturated dicarboxylic acids, their anhydrides and their $C_1$—$C_{20}$ mono- and dialkyl esters such as fumeric acid, maleic acid, itaconic acid, maleic anhydride, dibutyl fumarate and monethyl maleate, amides of ethylenically unsaturated carboxylic acids such as acrylamide and methacrylamide, vinyl aryl compounds such as styrene and alpha-methyl styrene; nitriles of ethylenically unsaturated carboxylic acids such as acrylonitrile and methacrylonitrile $C_1$—$C_{20}$ alkyl vinyl esters such as methyl vinyl ether, ethyl vinyl ether and stearyl vinyl ether; and dienes such as isoprene and butadiene.

These copolymers can be used to prepare protective films and may be utilized in applications such as molding, coatings, foams and the like.

As indicated heretofore, the polyphosphazene copolymers of this invention in addition to the

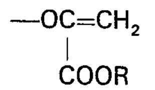

or $\alpha,\beta$-alkenoxy

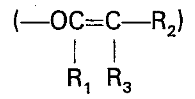

substituent groups contain substituted or unsubstituted alkoxy, aryloxy, amino or mercapto groups or mixtures thereof.

The alkoxy groups (substituted or unsubstituted) may be derived from aliphatic alcohols having from 1 to 20 carbon atoms such as methanol, ethanol, propanol, isopropanol, n-butanol, sec-butanol, hexanol, dodecanol and the like; fluoroalcohols, especially those represented by the formula $Z(CF_2)_nCH_2OH$ in which Z is hydrogen or fluorine and n is an integer from 1 to 10 as illustrated by trifluoroethanol, 2,2,3,3-pentafluoropropanol, 2,2,3,3,4,4,4-heptafluorobutanol; 2,2,3,3-tetrafluoropropanol, 2,2,3,3,4,4,5,5-octafluoropentanol, 2,2,3,3,4,4,5,5,6,6,7,7-dodecafluoroheptanol and the like. In instances where it is desired to incorporate mixed X′ substituent groups in the copolymers, mixtures of the foregoing alcohols may be employed.

The aryloxy groups (substituted or unsubstituted) may be derived from aromatic alcohols including among others phenol; alkylphenols such as cresols, xylenols, p-, o-, and m- ethyl and propyl phenols and the like; halogen-substituted phenols such as p-, o-, and m- chloro and bromo phenols and di- or tri-halogen substituted phenols and the like; and alkoxy-substituted phenols such as 4-methoxyphenol, 4-(n-butyoxy)phenol and the like. Mixtures of the foregoing aromatic alcohols may also be employed.

The amini groups may be derived from any of the amino compounds heretofore employed in the polyphosphazene polymer art. Thus, the amino groups may be derived from aliphatic primary and secondary amines such as methylamine, ethylamine, dimethylamine, ethylmethylamine and the like and aromatic amines such as those described in U.S. Patent 4,042,561 as illustrated by aniline, halogen-substituted anilines, alkoxy-substituted anilines and the like.

The mercapto groups may be derived from any of the mercaptan compounds heretofore employed in the polyphosphazene polymer art. Thus, for example, the mercaptan compounds described in U.S. Patent 3,974,242 to Lanier et al., may be utilized. Representative of suitable mercaptan compounds as described in the aforementioned patent are methyl mercaptan and its homologs ethyl, propyl, butyl, aryl and hexyl mercaptans, thiophenol, thionaphthols, benzyl mercaptan, cyclohexyl mercaptan and the like.

Preferred substituent groups represented by X′ for use in these copolymers are alkoxy groups, especially fluoroalkoxy groups and aryloxy groups especially halogen-substituted phenoxy groups.

The use of the tertiary amine in preparing the copolymers of the invention minimizes undesirable side reactions and at the same time acts as an effective acid scavenger.

Tertiary amines which may be employed in preparing the polymers of the invention are those represented by the general structure:

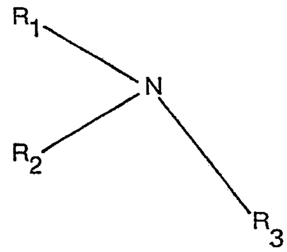

wherein $R_1$, $R_2$, and $R_3$ may each be alkyl containing from 1 to 8 carbon atoms. Thus, for example, the tertiary amine may be a trialkyl amine such as trimethylamine, triethylamine, tri-isopropylamine, tri-n-propylamine, tri-isobutylamine, and tri-n-butylamine. In addition, tertiary amines such as pyridine, N,N,N',N'-tetramethylethylene diamine (TMEDA), dipipyridyl ethane, 1,4 diaza bicyclo (2·2·2) octane (DABCO), N-methyl pyrolle and N-methyl morpholine can also be utilized.

The preferred tertiary amines for use in preparing the polymers of the invention are triethylamine, N,N,N',N'-tetramethylethylene diamine (TMEDA) and pyridine.

As indicated above, the copolymers of the present invention are prepared by reacting the poly(dichlorophosphazene) polymer with a mixture of the pyruvate ester or the enol form of an aldehyde or ketone and an aliphatic alcohol, aromatic alcohol, amino compound or mercaptan compound in the presence of a tertiary amine.

The specific reaction conditions and proportion of ingredients employed in preparing these copolymers can vary somewhat depending on factors such as the reactivity of the specific reactants and the particular tertiary amine employed, and the degree of substitution desired in the finished polymer. In general, reaction temperatures may range from about 25°C to about 200°C; and times may range from 3 hours up to 7 days; lower temperatures necessitating longer reaction times and higher temperatures allowing shorter reaction times. These conditions are, of course, utilized in order to obtain the most complete reaction possible, i.e. in order to insure substantially complete conversion of the chlorine atoms in the chloro-polymer to the corresponding esters of the reactant compounds.

The above reaction is ordinarily carried out in the presence of a solvent. The solvent employed in the reaction should be a solvent for the poly(dichlorophosphazene) polymer, the pyruvate ester or the aldehyde or ketone, the compounds from which the copolymer substituents are derived, and the tertiary amine. In addition, the materials in the reaction zone should be reasonably free of water, most preferably containing 0.01 percent by weight water or less. The avoidance of substantial amounts of water in the reaction system is necessary in order to inhibit the premature undesirable reaction of the available chlorine atoms in the chloropolymer therewith.

Examples of suitable solvents which may be employed include diglyme, triglyme, tetraglyme, toluene, xylene, cyclohexane, chloroform, dioxane, dioxalene, methylene chloride, tetrachloroethane, and tetrahydrofuran. The amount of solvent employed is not critical and any amount sufficient to solubilize the reaction mixture materials can be employed.

As indicated, a mixture of the pyruvate ester or aldehyde or ketone and the additional reactive compounds in a predetermined molar ratio is simultaneously reacted with the poly(dichlorophosphazene) in presence of tertiary amine to form a copolymer. An alternative method is the stepwise addition of the pyruvate ester or the aldehyde or the ketone and the additional reactive compound in any order to the poly(dichlorophosphazene) using tertiary amine, as described above, in each step, to form copolymers.

In general, the amount of the pyruvate ester or aldehyde or ketone reactant and the other copolymer forming reactants employed in the process should be at least molecularly equivalent to the number of available chlorine atoms in the starting chloropolymer. However, if desired, an excess of such reactants may be employed in order to insure substantially complete reaction of all the available chlorine atoms.

The following examples are submitted for the purpose of further illustrating the nature of the present invention. Parts and percentages referred to in the examples are by weight unless otherwise indicated.

The following examples (i.e., 1—4) illustrate copolymers of the invention which contain unsaturated substituents derived from pyruvate esters (i.e.,

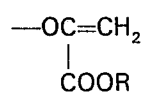

substituents).

### Example 1

Preparation of

$$-\!\!\!+\!NP(OCH_2CF_3)(O\underset{\substack{| \\ COOC_2H_5}}{C}=CH_2)\!+\!\!\!-$$ Copolymer

To a 296 ml (10 ounce) beverage bottle was charged 100 ml of dry tetrahydrofuran (hereinafter THF), 12.3 ml (88 millimoles) of triethylamine, 3.2 cc of trifluoroethanol (44 millimoles) and 4.82 ml of ethyl pyruvate (44 millimoles). To this was added a 12.85 percent solids THF solution of poly(dichlorophosphazene) [36.0 grams, 40.0 millimoles of P] having a degree of polymerization of about 2600. The bottle was placed in a 80°C rotary bath for 20 hours. After this no P-Cl bonds could be detected by I.R. (infrared spectroscopy) indicating good conversion. The triethylamine hydrochloride crystals were allowed to settle out and then a portion of this solution was poured onto a glass dish and the solvent was allowed to evaporate. After drying for 16 hours, a hard, clear film which was insoluble in THF was obtained.

### Example 2

To a 296 ml (10 ounce) beverage bottle was charged 2.41 ml (22 millimoles) of ethyl pyruvate ($CH_3COCOOC_2H_5$), 100 cc of THF, 8.49 g (66 millimoles) of p-chlorophenol, 12.3 ml (88 millimoles) of triethylamine and 42.7 g (40.3 millimoles) of a 10.93% cyclohexane solution of poly(dichlorophosphazene) having a degree of polymerization of about 2600. Heating to 120°C in an oven for 20 hours gave a solution that showed no PCl bond at 600 $cm^{-1}$ and new peaks at 545, 510 and 480 $cm^{-1}$.

Mixing 10 ml of this solution with 1 ml of a 0.06 M benzoyl peroxide solution in a test tube and then removing the solvent by a nitrogen purge gave a rubbery polymer. Upon heating to 120°C for 45 minutes, a rubbery block of THF insoluble crosslinked polymer was produced.

The following Examples 3 and 4 illustrate the use of copolymers of the invention as crosslinking agents.

### Example 3

In this example, the copolymer of Example1 was utilized as a crosslinking agent for styrene.

A 0.06 M solution (1.35 g in 100 ml) of benzoyl peroxide in carbon tetrachloride was first prepared. Then, a solution consisting of 40 millimoles of the copolymer of Example 1 in 130 ml of THF was prepared. Following this, a mixture consisting of 1 ml of the benzoyl peroxide solution and 10 ml of the copolymer solution was charged to a 14,6 x 0,22 cm (5.75″ x 0.085″) diameter test tube. Then, 8.73 millimoles of styrene was added to the test tube. The solvent was then slowly removed from the resulting mixture under vacuum at room temperature. The tube was then heated in an oil bath at 112°—120°C for 45 minutes (13.6 half lives of the peroxide) under a nitrogen atmosphere to affect curing.

The sample was then allowed to stand in THF for 3 days and the extent of solubility or swelling was observed. The sample was insoluble in THF and a few gelled particles were observed, indicting a high degree of crosslinking on cure.

An analysis of a cured sample of the copolymer of Example 1 produced the following results: C, 32.71%; H, 4.32%; N, 6.81%; P, 12.53%; Cl, 0.36%. It was calculated that the product contained 2.56% triethylamine hydrochloride and 11.89% hydrolyzed product. From this the composition of the polymeric product would have calculated values of: C, 32.75%; H, 4.28%; N, 6.08%; P, 12.87%; Cl, 0.66%.

### Example 4

In this Example, Example 3 was substantially repeated except that the styrene was replaced with 8.72 millimoles of maleic anhydride.

The sample on standing in THF for 3 days appeared to be slightly soluble but many gel particles were observed indicating a moderate degree of crosslinking.

The following examples (i.e., 5—10) illustrate copolymers of the invention containing unsaturated substituents derived from aldehydes and ketones.

### Example 5

Preparation of $-\!\!\!+\!(CF_3CH_2O)(CH_2CHO)PN\!+\!\!\!-$ Polymer

A 296 ml (10 oz.) bottle was charged with 2.87 ml (51.3 millimoles) of dry acetaldehyde, 3.13 ml (51.3 millimoles) of trifluoroethanol, 12.3 ml (88 millimoles) of triethylamine, 100 ml of dry tetrahydrofuran (hereinafter THF), and 61.8 g. (46.4 millimoles) of an 8.75 percent solids solution poly(dichlorophosphazene) in a THF solution. The materials in the bottle were heated at 80°C. for 40 hours. The materials were then subjected to Infrared spectroscopy which determined that the P-Cl bond at 600 $cm^{-1}$ was totally absent. The triethylamine hydrochloride crystals were separated from the solution. The vinyl ether containing polyphosphazene was compounded with benzoyl peroxide and after removal of solvent it cured to yield a THF insoluble product.

Example 6

An acetaldehyde derivatized polyphosphazene was prepared as in Example 5 to contain approximately 50% mole percent of substituents containing unsaturation. One ml of 0.06 M of a benzoyl peroxide in carbon tetrachloride was added to10 ml of the unsaturated polyphosphazene in a test tube. The solvent was removed from the polymer solution under vacuum at room temperature. The material in the test tube was heated in an oil bath at 112 or 120°C. for 45 minutes under a nitrogen atmosphere. The cured polyphosphazene polymer was allowed to stand in THF for three days to test solubility. The polymer was insoluble in THF and demonstrated moderate swelling.

Elemental analysis of the cured, dried polymer was as follows:

| | C | H | N | P | Cl |
|---|---|---|---|---|---|
| Actual | 23.45 | 3.83 | 8.56 | 12.82 | 1.55 |
| Calculated* | 23.48 | 3.49 | 7.02 | 13.55 | 2.26 |

*Calculated from 8.77% of Triethylamine hydrochloride, 3.49% of hydrolyzed chloropolymer and 51.54% of $\alpha,\beta$-alkenoxy derivative of polyphosphazene.

The polymer as produced in Example 6 was treated with 8.73 millimoles of styrene to produce a cured polymer which was insoluble in THF and showed only slight swelling. The polymer was further treated with 8.72 millimoles of maleic anhydride to produce a cured polymer of small gelled particles in THF.

Example 7

The propionaldehyde derivatized polyphosphazene containing 50 mole percent of substituents containing unsaturation was prepared in accordance with the procedure of Example 5 and cured with a peroxide solution as in Example 6 to yield a polyphosphazene polymer which was insoluble in THF and showed slight swelling while having the following elemental analysis:

| | C | H | N | P | Cl |
|---|---|---|---|---|---|
| Actual | 21.44 | 3.20 | 8.44 | 15.14 | 1.32 |
| Calculated* | 21.45 | 3.16 | 7.66 | 15.50 | 1.64 |

*Calculated from 6.37% of TEA HCl, 14.78% of hydrolyzed chloropolymer, 45.29% of trifluoroethanol derivatized polymer, and 20.22% of propionaldehyde derivatized polymer.

This polyphosphazene polymer was mixed with 8.73 millimoles of styrene to yield a THF insoluble product which demonstrated moderate swelling in THF. When 8.72 millimoles of maleic anhydride was added to the polymer complex the polymer took the form of small gelled particles.

Example 8

Preparation of $-\!\!\left[(CF_3CH_2O)(CH_2C(CH_3)O)PN\right]\!\!-$ Polymer

A 296 ml (10 oz.) bottle was charged with 3.24 (44 millimoles) of dry acetone, 3.2 ml (44 millimoles) of trifluoroethanol, 12.3 ml (88 millimoles) of dry triethylamine, 100 ml of dry THF, and 31.4 (40 millimoles) of a 14.76 percent solution of poly(dichlorophosphazene) in THF. The bottle was heated to 80°C in a rotary bath for 20 hours and upon cooling the insoluble triethylamine hydrochloride settled out and was separated. Infrared spectroscopy of the polymer solution showed the loss of the 600 $cm^{-1}$ band denoting the loss of P-Cl bonds, and the apperance of a 582 $cm^{-1}$ band which is characteristic of a substituted polyphosphazene. A film was cast onto glass from the polymer solution and after four days the film was insoluble in THF and water. The film was tough and adhered well to the glass substrate. When the film was allowed to stand in water some swelling occurred which was attributed to the partial hydrolysis of the unsaturated substituent.

Example 9

An acetophenone derivatized polyphosphazene was prepared as in Example 8 to contain approximately 50 mole percent of unsaturated substituents derived from acetophenone. The polymer was then subjected to the peroxide curing treatment of Example 6 to yield a polymer which was insoluble in THF and demonstrated little swelling. Elemental analysis of the cured, dried polymer was as follows:

| | C | H | N | P | Cl |
|---|---|---|---|---|---|
| Actual | 19.87 | 2.76 | 8.57 | 16.1 | 1.48 |
| Calculated* | 19.87 | 2.72 | 8.06 | 16.34 | 1.69 |

*Calculated for 6.58% of triethylamine hydrochloride, 20.49% of hydrolyzed chloropolymer, 59.27% of trifluoroethanol derivatized polymer and 6.95% of unsaturated derivative of polyphosphazene.

The polymer as produced in Example 9 was treated with 8.73 millimoles of styrene to yield a polymer which was insoluble and showed little swelling in THF.

Example 10

Preparation of

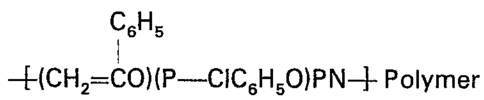

To a 828 ml (28 oz.) bottle was charged 5.12 ml (44 millimoles) of acetophenone, 100 ml of THF, 4.43 ml (44 millimoles) of p-chlorophenol, 12.3 ml (88 millimoles) of triethylamine and 44.6 grams (40.2 millimoles) of a 10.85 percent solids solution of poly(dichlorophosphazene) in cyclohexane. The bottle was heated for 68 hours at 120°C. At the end of this time period, no P-Cl could be detected at 600 $cm^{-1}$ although a carbonyl band at 590 $cm^{-1}$ caused strong interference in this determination. New bands at 562, 538 and 475 $cm^{-1}$ were observed.

A 10 ml portion of this solution was added to a test tube containing 10 cc of a 0.06 M benzoyl peroxide solution in chloroform. After removal of the solvents with a $N_2$ purge, the sample was dried with a vacuum of less than 0.02 mm of Hg, purged with $N_2$ and heated for 45 minutes at 120°C to produce a solvent resistant (i.e., THF insoluble) film.

## Claims

1. A method of preparing polyphosphate copolymers comprising randomly distributed units represented by the formulas:

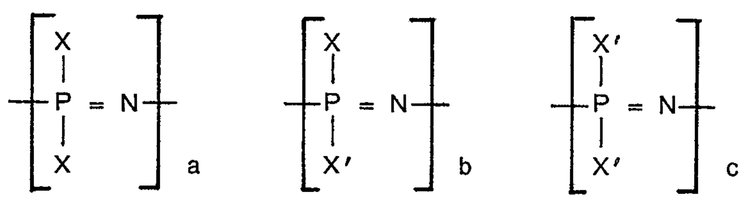

wherein X is

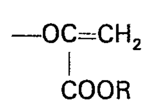

in which R is alkyl containing from 1 to 12 carbon atoms or aryl, and wherein X' is selected from the group consisting of substituted and unsubstituted alkoxy, aryloxy, mercapto and amino radicals, or mixtures thereof; and wherein $20 \leq (a+b+c) \leq 50{,}000$ per polymer,
characterized by reacting a polydichlorophosphazene polymer having the formula $-(NPCl_2)_n-$, wherein n is from 20 to 50,000, with a pyruvate ester having the formula $CH_3COCOOR$ in which R is alkyl containing from 1 to 12 carbon atoms or aryl and an aliphatic alcohol, aromatic alcohol, amino compound or mercaptan compound, or mixtures thereof, in the presence of a tertiary amine.

2. The method of claim 1 wherein said pyruvate ester is ethyl pyruvate.

3. The method of claim 1 wherein said pyruvate ester is methyl pyruvate.

4. The method of claim 1 wherein said pyruvate ester isethyl pyruvate and said aliphatic alcohol is trifluoroethanol.

5. The method of claim 1 wherein said pyruvate ester is methyl pyruvate and said aliphatic alcohol is trifluoroethanol.

6. The method of claim 1 wherein said tertiary amine is triethylamine.

7. The method of claim 1 wherein said pyruvate ester is ethyl pyruvate, said alcohol is trifluoroethanol and said tertiary amine is triethylamine.

8. A method of preparing polyphosphazene copolymers comprising randomly distributed units represented by the formulas:

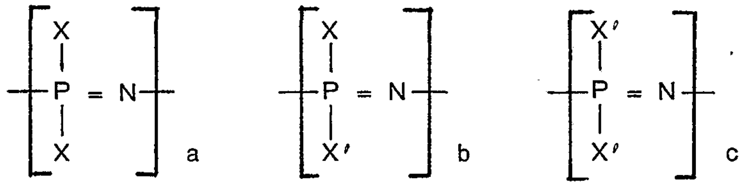

wherein X is

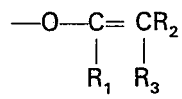

in which R is alkyl containing from 1 to 12 carbon atoms or aryl, $R_1$, $R_2$, and $R_3$ are independently selected from a group consisting of hydrogen, substituted and unsubstituted alkyl radicals containing from 1 to 15 carbon atoms, and substituted and unsubstituted cycloalkyl, aryl, arylalkyl, and heterocyclic radicals; and wherein X′ is selected from the group consisting of substituted and unsubstituted alkoxy, aryloxy, mercapto and amino radicals, or mixtures thereof; and wherein $20 \leq (a+b+c) \leq 50{,}000$ per polymer, characterized by reacting a polydichlorophosphazene having the formula $-(NPCl_2)_n$, wherein n is from 20 to 50,000 with an enol form of an aldehyde containing at least two carbon atoms or of a ketone or mixtures thereof as a first compound and a substituted or unsubstituted aliphatic alcohol, aromatic alcohol, amino compound or mercaptan compound of mixtures as a second compound thereof in the presence of a tertiary amine.

9. The method of claim 8 wherein the first compound is acetaldehyde.

10. The method of claim 8 wherein the first compound is propionaldehyde.

11. The method of claim 8 wherein the first compound is acetone.

12. The method of claim 8 wherein the first compound is acetophenone.

13. The method of claim 8 wherein the second compound is trifluoroethanol.

14. The method of claim 8 wherein the first compound is a mixture of acetaldehyde and propionaldehyde and the second compound is trifluoroethanol.

15. The method of claim 8 wherein the tertiary amine is triethylamine.

## Revendications

1. Méthode de préparation de copolymères de phosphazène comprenant des unités distribuées au hasard et représentées par les formules ci-après:

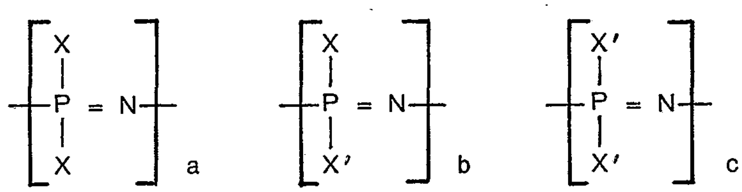

dans lesquelles:

X est un radical

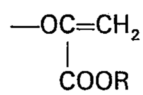

où R est un groupe alkyle contenant 1 à 12 atomes de carbone, ou aryle;

X′ est choisi dans le groupe formé par des radicaux alcoxy- ou aryloxy- substitués ou non, mercapto-, amino- et leurs mélanges; et où $20 \leq (a+b+c) \leq 50\,000$ par polymère,

caractérisée en ce que l'on fait réagir un polydichlorophosphazène représenté par la formule $-(NPCl_2)_n-$, où n est compris entre 20 et 50 000, avec un ester pyruvique représenté par la formule $CH_3COCOOR$ dans laquelle R est un radical alkyle contenant 1 à 12 atomes de carbone, ou aryle et un alcool aliphatique, un alcool aromatique, un composé amino-, mercaptan ou leurs mélanges, en présence d'une amine tertiaire.

2. Méthode selon la Revendication 1, caractérisée en ce que l'ester pyruvique est le pyruvate d'éthyle.

3. Méthode selon la Revendication 1, caractérisée en ce que l'ester pyruvique est le pyruvate de méthyle.

4. Méthode selon la Revendication 1, caractérisée en ce que l'ester pyruvique est le pyruvate d'éthyle, et l'alcool aliphatique est le trifluoroéthanol.

5. Méthode selon la Revendication 1, caractérisée en ce que l'ester pyruvique est le pyruvate de méthyle, et l'alcool aliphatique est le trifluoroéthanol.

6. Méthode selon la Revendication 1, caractérisée en ce que l'amine tertiaire est la triéthylamine.

7. Méthode selon la Revendication 1, caractérisée en ce que l'ester pyruvique est le pyruvate d'éthyle, l'alcool est le trifluoroéthanol et l'amine tertiaire est la triéthylamine.

8. Méthode de préparation de copolymères de phosphazène comprenant des unités distribuées au hasard et représentées par les formules générales ci-après:

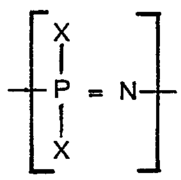 a 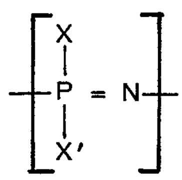 b 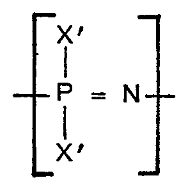 c

dans lesquelles:
X est un radical

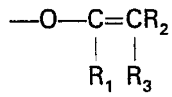

où $R_1$, $R_2$ et $R_3$ sont choisis indépendamment dans le groupe formé par un atome d'hydrogène, des radicaux alkyle substitués ou non contenant 1 à 15 atomes de carbone, des radicaux hétérocycliques, aryle, arylalkyle et cycloalkyle substitués ou non; et où

X' est choisi dans le groupe formé par des radicaux aryloxy- ou alcoxy- substitués ou non, mercapto-, amino- ou leurs mélanges et où $20 \leq (a+b+c) \leq 50\,000$ par polymère, caractérisée en ce qu'on fait réagir un polydichlorophosphazène représenté par la formule $-(NPCl_2)_n-$ où n est compris entre 20 et 50 000, avec une forme énol d'un aldéhyde contenant au moins deux atomes de carbone ou d'une cétone ou leurs mélanges à titre de premier composant, et un alcool aromatique ou alipohatique substitué ou non, un composé amino-, mercaptan ou leurs mélanges à titre de second composant de la réaction, en présence d'une amine tertiaire.

9. Méthode selon la Revendication 8, caractérisée en ce que le premier composant est l'acétaldéhyde.

10. Méthode selon la Revendication 8, caractérisée en ce que le premier composant est du propionaldéhyde.

11. Méthode selon la Revendication 8, caractérisée en ce que le premier composant est l'acétone.

12. Méthode selon la Revendication 8, caractérisée en ce que le premier composant est l'acétophénone.

13. Méthode selon la Revendication 8, caractérisé en ce que le second composant est le trifluoroéthanol.

14. Méthode selon la Revendication 8, caractérisée en ce que le premier composant est un mélange d'acétaldéhyde et de propionaldéhyde, et que le second composant est le trifluoroéthanol.

15. Méthode selon la Revendication 8, caractérisée en ce que l'amine tertiaire est la triéthylamine.

**Patentansprüche**

1. Verfahren zur Herstellung von Polyphosphazencopolymeren mit beliebig verteilten Einheiten der Formeln:

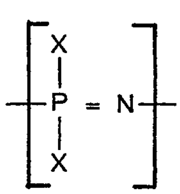 a 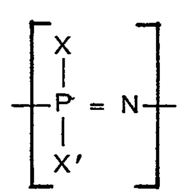 b 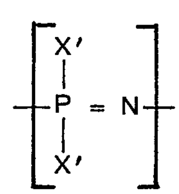 c

worin X für

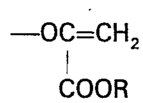

steht, wobei R Alkyl mit 1 bis 12 Kohlenstoffatomen oder Aryl bedeutet,

und wobei X' aus der Gruppe substituierte und unsubstituierte Alkoxy-, Aryloxy-, Mercapto- und Aminoradikale oder Gemische davon ausgewählt ist, und wobei $20 \leq (a+b+c) \leq 50000$ pro Polymeres ist, dadurch gekennzeichnet, daß man ein Polydichlorphosphazenpolymeres mit der Formel $—(NPCl_2)_n—$, wobei n 20 bis 50000 ist, mit einem Pyruvatester mit der Formel $CH_3COCOOR$, wobei R für Alkyl mit 1 bis 12 Kohlenstoffatomen oder Aryl steht, und einem aliphatischen Alkohol, aromatischen Alkohol, einer Aminoverbindung oder einer Mercaptanverbindung oder Gemischen davon in Gegenwart eines tertiären Amins umsetzt.

2. Verfahren nach Anspruch 1, dadurch gekennzeichnet, daß der Pyruvatester Äthylpyruvat ist.

3. Verfahren nach Anspruch 1, dadurch gekennzeichnet, daß der Pyruvatester Methylpyruvat ist.

4. Verfahren nach Anspruch 1, dadurch gekennzeichnet, daß der Pyruvatester Äthylpyruvat ist und daß der aliphatische Alkohol Trifluoräthanol ist.

5. Verfahren nach Anspruch 1, dadurch gekennzeichnet, daß der Pyruvatester Methylpyruvat ist und daß der aliphatische Alkohol Trifluoräthanol ist.

6. Verfahren nach Anspruch 1, dadurch gekennzeichnet, daß das tertiäre Amin Triäthylamin ist.

7. Verfahren nach Anspruch 1, dadurch gekennzeichnet, daß der Pyruvatester Äthylpyruvat ist, daß der Alkohol Trifluoräthanol ist und daß das tertiäre Amin Triäthylamin ist.

8. Verfahren zur Herstellung von Polyphosphazencopolymeren mit beliebig verteilten Einheiten der Formeln:

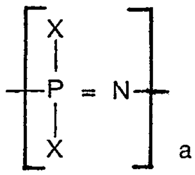 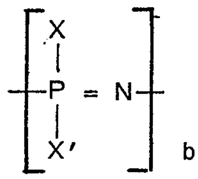 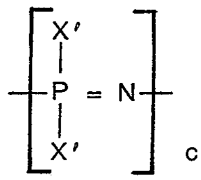

worin X für

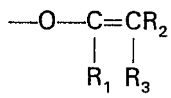

steht, wobei R Alkyl mit 1 bis 12 Kohlenstoffatomen oder Aryl bedeutet, $R_1$, $R_2$ und $R_3$ unabhängig voneinander aus der Gruppe Wasserstoff, substituierte Alkylradikale mit 1 bis 15 Kohlenstoffatomen und substituierte und unsubstituierte Cycloalkyl-, Aryl-, Arylalkyl- und heterocyclische Radikale ausgewählt sind, und wobei X' aus der Gruppe substituierte und unsubstituierte Alkoxy-, Aryloxy-, Mercapto- und Aminoradikale oder Gemische davon ausgewählt ist, und wobei $20 \leq (a+b+c) \leq 50000$ pro Polymeres ist, dadurch gekennzeichnet, daß man ein Polydichlorphosphazen mit der Formel $—(NPCl_2)_n$, wobei n 20 bis 50000 ist, mit einer Enolform eines Aldehyds mit mindestens 2 Kohlenstoffatomen oder eines Ketons oder Gemischen davon als erste Verbindung und mit einem substituierten oder unsubstituierten aliphatischen Alkohol, aromatischen Alkohol, Aminoverbindung oder Mercaptanverbindung oder Gemischen davon als zweite Verbindung davon in Gegenwart eines tertiären Amins umsetzt.

9. Verfahren nach Anspruch 8, dadurch gekennzeichnet, daß die erste Verbindung Acetaldehyd ist.

10. Verfahren nach Anspruch 8, dadurch gekennzeichnet, daß die erste Verbindung Propionaldehyd ist.

11. Verfahren nach Anspruch 8, dadurch gekennzeichnet, daß die erste Verbindung Aceton ist.

12. Verfahren nach Anspruch 8, dadurch gekennzeichnet, daß die erste Verbindung Acetophenon ist.

13. Verfahren nach Anspruch 8, dadurch gekennzeichnet, daß die zweite Verbindung Trifluoräthanol ist.

14. Verfahren nach Anspruch 8, dadurch gekennzeichnet, daß die erste Verbindung ein Gemisch aus Acetaldehyd und Propionaldehyd ist und daß die zweite Verbindung Trifluoräthanol ist.

15. Verfahren nach Anspruch 8, dadurch gekennzeichnet, daß das tertiäre Amin Triäthylamin ist.